# EUROPEAN PATENT SPECIFICATION

(11) **EP 1 599 973 B1**
(45) Date of publication and mention of the grant of the patent: **14.07.2010**
(21) Application number: 03706604.0
(22) Date of filing: 05.03.2003
(51) Int. Cl.: H04L 12/56, H04L 12/14

(54) **Accounting in ad-hoc networks**
Abrechnen in einem Ad-hoc Kommunikationsnetz
Exercice d'une comptabilité dans des réseaux ad hoc

(43) Date of publication of application: 30.11.2005
(73) Proprietor: NTT DoCoMo, Inc., Tokyo 100-6150 (JP)
(72) Inventor: HOFMANN, Philipp, 80686 München (DE); PREHOFER, Christian, 81477 Munich (DE); MURASE, Atsushi, Kanagawa 238-0048 (JP)
(74) Representative: HOFFMANN EITLE
(86) International application number: PCT/EP2003/002241
(87) International publication number: WO 2004/080002

(56) References cited:
- EP-A- 1 207 707
- WO-A-02/51038
- DE-A- 19 844 596
- NETSCAN: "The Problem" INTERNET DOCUMENT, [Online] 14 July 1999 (1999-07-14), pages 1-2, XP002260999 Retrieved from the Internet: <URL:http://netscan.org/broadcast/problem. html> [retrieved on 2003-11-11]
- ANDREW TANENBAUM: "Computer Networks - fourth edition" 31 August 2002 (2002-08-31) , PEARSON EDUCATION INTERNATIONAL , UPPER SADDLE RIVER, NJ, USA XP002269213 page 375 -page 380
- T. YAMAMOTO, M. SUGANO, M. MURATA, T. HATAUCHI, Y. HOSOOKA: "Performance Improvement in Ad hoc Wireless Networks with Consideration to Packet Duplication" IEICE TRANSACTION COMMUNICATION, [Online] 11 November 2001 (2001-11-11), pages 1-4, XP002269212 Retrieved from the Internet: <URL:http://www.osaka-hsu.ac.jp/~sugano/pa pers/yamamoto01apcc-adhoc.pdf> [retrieved on 2004-02-05]
- SHARONY J: "A MOBILE RADIO NETWORK ARCHITECTURE WITH DYNAMICALLY CHANGING TOPOLOGY USING VIRTUAL SUBNETS" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. 2, 23 June 1996 (1996-06-23), pages 807-812, XP000625886 ISBN: 0-7803-3251-2
- PREHOFER C ET AL: "Synchronized reconfiguration of a group of mobile nodes in ad-hoc networks" IEEE, vol. 1, 23 February 2003 (2003-02-23), pages 400-405, XP010637839
- KITAMURA H: "Connection/Link Status Investigation (CSI) for IPv6, IPv6 HHop-by-Hop option and ICMPv6 messages Extension" INTERNET DRAFT, 26 February 1999 (1999-02-26), XP002179512 Retrieved from the Internet: <URL:www.ietf.org> [retrieved on 2001-10-08]

## Description

### FIELD OF THE INVENTION

The invention relates to a method and apparatus for controlling accounting operations in an ad-hoc communications network and to a corresponding relay node.

### BACKGROUND OF THE INVENTION

Various factors in association with technology, business, regulatory efforts and social behavior have driven the spreading of wireless ad-hoc networks. An ad-hoc network is for example a wireless network formed without a central administration or without a centralized management of communication resources, such as assignment of communication channels to communicating parties, etc. An ad-hoc network may consist of a plurality of mobile devices using a wireless interface for an exchange of data, such as packet data. Each mobile device of the ad-hoc network thereby serves as a communication node, and will be responsible for forwarding data on behalf of other mobile devices and further, to run user applications, such as communication services on behalf of an owner of the mobile device. Various kinds of ad-hoc networks exist, including networks having mobile nodes and/or fixed wireless nodes, networks that rely on packetized data transfer, on direct communication links or any kind of connectionless links.

In a typical ad-hoc network, to establish a communication link between two parties, a communication path is established via a number of communication devices participating in the relaying of data between the two communicating devices. A communication can generally only be established, if the required participating communication devices for relaying the information between the parties can be found. Obviously, the more communication devices and thus potential relay nodes are available in the ad-hoc network, the more likely it is that a communication path can be established. Further, it is an important factor for a proper operation of the ad-hoc communication network, that individual nodes are able and willing to participate in relay operations for establishing a communication path. Even if a relay node would have available sufficient communication resources for participating in a call as a relay node, in mobile devices factors such as battery power, availability of processing resources, etc., may influence the decision whether a relay node can or wants to make itself available for relay operations of a communication call.

For example, at times of high communication load situations may occur where there is an insufficient number of relay nodes available in the ad-hoc network for relaying the communication information.

Further, while traditional communication networks often have a central operating center responsible for establishing connections and managing the subscribers of the network, including billing issues, an ad-hoc network generally does not comprise any central organizing facility to track transmission activities in the ad-hoc network and therefore to account for the services used and/or rendered by the participants of the ad-hoc network.

WO 02/51038 A1 refers to billing in a mobile environment where mobile equipment is used as relay. A communication device has a relay operating mode and a non-relay operating mode and a billing system has means to store information relating to the operating mode of the communication device and means for billing calculation using the information relating to the operating mode of the communication device. The network is informed whether a particular communication device is able/willing to participate in relaying communication.

### SUMMARY OF THE INVENTION

It is the object of the invention to provide for a mechanism for accounting for relay operations carried out at relay nodes in an ad-hoc network. It is further the object of the invention to increase the availability of relay nodes in an ad-hoc network for relaying communication information.

The above object of the invention is solved by the subject matter of the independent claims. Further advantageous features of the invention are disclosed in further claims.

According to an example, a method of controlling accounting operations in an ad-hoc communication network is provided, including determining a relay mode at each of a group of relay nodes participating in relaying communication data over a communication path during a communication between two communication devices; and accounting for the relaying of the communication data at each relay node of the group of relay nodes depending on the relay mode. Accordingly, by determining a relay mode at each of the relay nodes participating in relaying communication information, an accounting for the relay operations at each node can be implemented even in a network without central operation control such as an ad-hoc network. Further, by properly accounting for the relay operations carried out at the relay nodes, a reward and incentive can be provided for an owner of a communication device to make his communication device available as a relay node of the ad-hoc network. Still further, by accounting for the relay operations at each node, information on the structure and behavior of the ad-hoc network can be obtained.

Advantageously, the accounting includes recording information on relay services rendered by the relay nodes and/or transmitting the recorded information on the relay services to a central accounting facility. Moreover, the accounting may include at least one of allocating a compensation for the relay nodes and charging the communication devices. Accordingly, operations ranging from recording information on relay services to charging and allocating a compensation can be integrated.

Advantageously , information on the group of relay nodes participating in the relaying of communication data of the communication path is obtained from a routing protocol. Thus, information on participating relay nodes can be easily obtained, in order to facilitate the accounting process.

Alternatively, the information on the group of relay nodes participating in the relaying of communication information is obtained by transmitting a trace message along the communication path, in order to prompt each relay node of the group of relay nodes to contact a control center. The trace message may be forwarded from each relay node to a subsequent relay node, thus passing all participating relay nodes, so that the control center is able to obtain information on all the participating nodes.

Further, in an alternative, information on the group of participating relay node is obtained by transmitting a recording message to at least one of the communication devices along the communication path, in order to record an identifier of each of the relay nodes of the group of relay nodes. Thus, information on the participating relay nodes may be included into a recording message, for informing the control center of the participating nodes.

In another example, the IPv6 hop-by-hop options header may be used to initialize the trace message or recording message at each relay node. As the IPv6 hop-by-hop options header may be a feature already supported in an ad-hoc network, modifications to an ad-hoc network in this regard, to implement the accounting functionality, may not be necessary.

According to another example an authorization of at least one of the communication devices to obtain relay services of the ad-hoc network is determined. Further an authorization of at least one of the relay nodes to provide relay services in the ad-hoc network can be determined. Accordingly, unauthorized utilization and unauthorized provision of relay services can be prevented.

According to still another example, in order to determine the availability of the participating relay nodes, an availability request message may be transmitted to each of the participating relay nodes, to determine the availability of each of the plurality of relay nodes in the communication path required for transmitting communication data between communication devices. Further, an availability acknowledgement message may be received from each of the participating relay nodes, indicating, whether the relay nodes are available for transmission or not.

According to another example, if one of the relay nodes is not available, information on an alternative relay node may be obtained, and the alternative relay node may be interrogated regarding availability. Again, information on the alternative relay node may be obtained from a routing protocol, or may be obtained using a trace message or recording message.

The availability request message may include information on at least one of a required relay mode, and a compensation offer. Thus, potentially participating relay nodes can be informed of the required terms for transmission, in order to facilitate making a decision whether indicating availability or not.

Still further, according to another example, a message may be received from the ad-hoc network, the message including information on the occurrence of a topology change.

Alternatively or in addition thereto, in order to obtain information on topology changes of the ad-hoc network, information on such changes in the participating nodes may be actively obtained from the group of relay nodes during the call.

The relay nodes may be actively checked to obtain the information on dynamic changes of the participating nodes. Thus, the accounting for relay operations may be improved by taking into account for example a time of participation of a relay node in relaying information.

The relay nodes may further be checked using at least one of a trace message, a recording message and an ICMP (Internet Control Message Protocol) destination unreachable message.

To further facilitate accounting for relay operations, the accounting may be performed by an external accounting authority, such as an operator of an external centrally accounted network. Accordingly, even though the ad-hoc network does not have a central and trusted accounting authority, cost efficient accounting can be implemented by using the services of external accounting authorities.

According to another example, the relay mode may specify at least one of a data throughput required, a transmission time delay allowed, a packet loss allowed and allowed jitter. Thus, by specifying the parameters of the required transmission, i.e. a quality of service, highly accurate accounting for the relay can be implemented.

Still further, to improve the accounting accuracy, at least one of a relay time and transmitted amount of data at each of the relay nodes of the group of relay nodes during the call between the two communication devices may be determined.

Still further, according to another example, the accounting may include allocating a compensation, the compensation including at least one of an ad-hoc network relay services and a monetary compensation. Thus, by influencing the compensation parameter, incentive may be provided for owners of nodes of the network, to participate in data transmissions. Thus, the availability of communication resources may be increased or decreased according to need.

According to still another example, it is particularly advantageous, if the control device performing accounting operations forms part of a gateway from the ad-hoc network to an external network, preferably an external network having a centralized operator, while the gateway forms part of the communication part between the two communication devices. Accordingly, as all communications between the external network and the ad-hoc network need to be routed through the gateway, the gateway may conveniently provide a central accounting facility for the ad-hoc network.

According to another example, a program may have instructions adapted to carry out any of the above operations. A computer readable medium may have therein embodied a computer program, wherein the program is to make a data processing device to execute any of the above operations. Still further, a computer program product may comprise the computer readable medium.

According to another example a control center is provided for controlling accounting operations in an ad-hoc communications network, including determining means for determining a relay mode at each of a group of relay nodes participating in relaying communication data of a communication path during a call between two communication devices, and accounting means for accounting for the relaying of the communication data at each of the group of relay nodes depending on the relay mode.

Still further, according to another example a relay node of an ad-hoc network is provided, including communication means to receive an availability request message for determining an availability of the relay node to perform relay operations in a communication path for transmitting communication data between two communication devices according to a relay mode; and availability deciding means for determining an availability of the relay node for performing the relay operations, and wherein the communications means is arranged to transmit an availability acknowledgement message indicating whether the relay node is available or not.

### BRIEF DESCRIPTION OF THE DRAWINGS

- Fig. 1: illustrates elements of a communication system, including a control center for performing accounting operations in the an ad- hoc network according to an embodiment of the invention;
- Fig. 2: illustrates operations of a method for controlling an accounting in an ad-hoc network according to an embodiment of the invention;
- Fig. 3: illustrates operations of a method for controlling an ad-hoc network for accounting for services according to another embodiment of the invention, particularly illustrating operations to determine participating nodes;
- Fig. 4: illustrates operations of a method for controlling an ad-hoc network according to an embodiment of the invention, particularly illustration operations to obtain identification information on participating relay nodes;
- Fig. 5a and 5b: illustrate operations of controlling an ad-hoc network according to an embodiment of the invention, particularly illustration operations to obtain information on participating relay nodes;
- Fig. 6: illustrates operations of controlling an ad- hoc network according to an embodiment of the invention, particularly illustrating operations for determining an availability of the relay nodes;
- Fig. 7: illustrates element of a relay node of the ad- hoc network according to an embodiment of the invention;
- Fig. 8: illustrates operations of a method of controlling an ad-hoc network according to an embodiment of the invention, particularly illustrating operations upon detecting a typology change;
- Fig. 9: illustrates a flow of messages in an ad-hoc network according to another embodiment of the invention;
- Fig. 10: illustrates a flow of messages in an ad-hoc network according to another embodiment of the invention;
- Fig. 11: illustrates a flow of messages in an ad-hoc network according to another embodiment of the invention;
- Fig. 12: a flow of messages in an ad-hoc network according to another embodiment of the invention; and
- Fig. 13: illustrates elements of an ad-hoc network according to another embodiment of the invention.

### DETAILED DESCRIPTION OF THE PREFERRED EMBODIMENTS

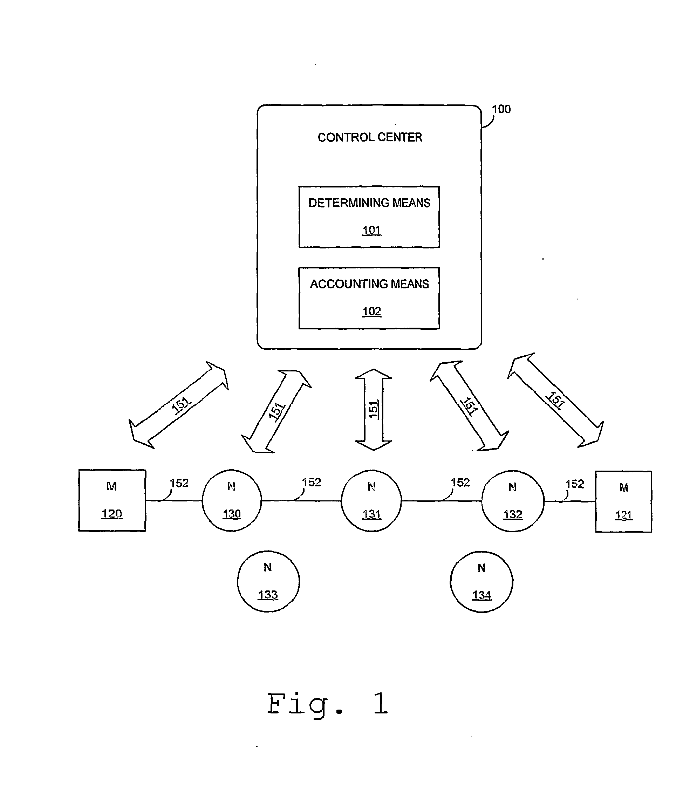

Fig. 1 shows elements of a communication system according to an embodiment of the invention.

Fig. 1 particularly illustrates a control center 100 for controlling accounting operations in the ad-hoc network, including determining means 101 and accounting means 102.

Moreover, Fig. 1 shows two communication devices 120 and 121 being in communication with one another, at least one of which forming part of the ad-hoc network, and relay nodes 130, 131, 132, 133 and 134. In Fig. 1 it is assumed that a communication path 152 is established between the communication devices 120 and 121 via the relay nodes 130, 131 and 132. The communication devices 120 and 121 and the relay nodes 130, 131, 132, 133 and 134 may constitute terminals of the ad-hoc network which may operate as communication device and/or relay node of the ad-hoc network.

The control center 100 is arranged to communicate with the relay nodes and/or communication devices of the ad-hoc network, as indicated by the arrows 151 to control accounting operations in the ad-hoc network and comprises determining means 101 for determining a relay mode at each of the group of relay nodes 130, 131 and 132, participating in relaying communication data over the communication path 152 between the two communication devices 120 and 121. Further, the control center comprises accounting means 102 to account for the relaying of the communication data at each of the group of relay nodes 130, 131 and 132, depending on the relay mode and further, the accounting means may account for the relay services provided for the communication devices 120 and/or 121, e.g. for billing purposes.

The relay mode may include any kind of characteristic of the communication between the two communication devices 120 and 121, including parameters such as required data throughput, allowed transmission time delay, allowed packet loss, allowed jitter (differences in packet delay), and any other kind of quality of service parameters.

Besides determining the participating nodes of the communication path, in the present example the relay nodes 130, 131 and 132 in the communication path 152 between the communication devices 120 and 121, the determining means may be arranged to further determine the availability of each of the relay nodes in the communication path 152, e.g. by transmitting an availability request message to each of the participating relay nodes, preferably before the communication path is being established. Upon receiving an availability request message the relay nodes will respond using an availability acknowledgement message, indicating whether the relay nodes are available for transmission or not. In the present example it is assumed that the relay nodes 130, 131 and 132 have indicated their availability for transmitting communication data between the communication devices 120 and 121.

The availability request message may also include information on a required relay mode for transmission and/or a compensation offer and similar, to provide the eligible relay nodes with the information needed to make a decision on participating in the relaying service or not. For example, based on the above information, a user owning a communication device, can decide whether to make his communication device available as a relay node or not.

In order to accurately account for the relay services rendered by each of the participating nodes in the communication path 152, in the present example nodes 130, 131 and 132, the determining means may further be arranged to determine a relay time of data transmitted of each of the participating relay nodes during the overall duration of the communication between the two communication devices 120 and 121. Alternatively or in addition thereto, an overall amount of data, such as packetized communication data, forwarded by each of the relay nodes can be determined, for improving the accuracy of the accounting. Based on the relay time, the total amount of relayed data and on the further transmission characteristics the accounting means can allocate a compensation for each of the participating relay nodes for the relay service and can charge the communication devices for using the relay services.

Accordingly, the invention provides for a mechanism of accounting in an ad-hoc network based on communication services provided by each of a group of relay nodes participating in providing relay services, despite the fact that the ad-hoc network does not comprise a central operations control facility for operations such as assigning a communication channels upon communication request and similar.

Further, the accounting means provides for a tool to reward a relay node for providing relay services in the ad-hoc network. Thus, by increasing or reducing a reward, more or less users will decide to participate in providing relay services, and thus a communication capacity in the ad-hoc network can be advantageously controlled.

In the following, further examples of the elements shown in Fig. 1 will be described. It is noted that the following constitutes examples only and should not be construed as limiting the invention.

As noted above, the control center 100 constitutes a facility for controlling the ad-hoc network, particularly for controlling accounting operations in the ad-hoc network, including, e.g. determining participating relaying nodes, determining the availability of the nodes and accounting for relay operations performed in association with a communication between two communication devices.

The control center 100 may be constituted by any kind of computing devices providing the above functionality, such as a computing device having sufficient computing resources to determine a relay mode and to account for relay operations of a large number of nodes of an ad-hoc network, and allowing to simultaneously handle determining and accounting operations in association with a large number of communications calls. Preferably, the control center comprises at least one processing unit for performing the determination and accounting operations, and a memory for storing software instructions of programs for determining the relay mode and for performing the accounting for the relaying, as detailed above. The determining means 101 may thus be constituted by a software program including instructions loaded from the memory and executed on at least one processing unit of the control center and further, the accounting means may be constituted by correspondingly loaded software instructions of a program to be executed by the at least one processing unit.

To facilitate the execution of the software instructions the at least one processing unit may include a cache or random access memory for intermediately storing software instructions before execution.

Further, while the functionality of the determining means and the accounting means may be realized via software programs, it is also possible that the functionality of the determining means and the accounting means is at least partially realized in hardware.

Further, the control center 100 preferably includes a communication unit for performing the necessary communication operations between the control center and the plurality of relay nodes of the ad-hoc network. The communication operations may involve the exchange of messages in association with determining a relay mode at the relay nodes and in association with accounting for the performed relay services.

In a further example, the accounting operations include recording information on relay services rendered by the relay nodes and/or transmitting the recorded information on the relay services to a central accounting facility. The information on relay services can comprise information on the relay mode used, a time of service provision, a relay time, an amount of data transmitted, and similar. The information on relay services may pertain to the relay nodes providing the relay services and/or to the communication devices utilizing the relay services.

Moreover, the accounting may include at least one of allocating a compensation for the relay nodes and charging the communication devices. Accordingly, operations ranging from recording information on relay services to charging and allocating a compensation can be rendered by the control center.

While the control center may only be responsible for operations in association with accounting for relay services performed in the ad-hoc network, it is also possible that the control center supports an establishment of a communication path, e.g. based on requests for communication obtained from communication devices such as the communication devices 120 and 121.

A communication between the control center 100 and the relay nodes 130 - 134 may be performed by making use of the infrastructure of the ad-hoc network, i.e. may use transmission channels of the ad-hoc network. Thus, while the control center 100, as indicated by the arrows 151, could directly communicate with each of the relay nodes 130, 131 and 132, in an alternative the control center could communicate with the relay nodes 130, 131 and 132 in the communication path 152 through further nodes of the ad-hoc network, such as the relay node 133 and 134 not participating in the communication via the communication path 152. Further, the control center 100 could contact the relay nodes making use of communications along the communication path 152, e.g. to contact the communication node 131 of the ad-hoc network, the control center 100 could use the communication path 152, after contacting one of the remaining nodes of the communication path, i.e. the nodes 130 and 131, or even the communication devices 130 and 131.

A communication between the control center and the relay nodes 131 may involve dedicated communication links or any connectionless links. Similarly, the communication via the communication path 152 may involve a packetized transmission of data, dedicated communication links or any other kind of communication protocol.

In a further example, the control center 100 may also form an integral part of the communication path, i.e. communications between the communication devices 120 and 121 may be routed directly through the control center 100, further facilitating the determining operations and accounting operations. For example, the control center may constitute part of a gateway from the ad-hoc network to any kind of external network, the gateway being responsible for communications between the external network and the ad-hoc network. The external network may be a network having a centralized operation facility, such as centralized control entity run by a single operator, i.e. be a trusted domain. The control center may thus be under the supervision of the operator of the external network, the control center forming a trusted and/or secured element in the untrusted domain of the ad-hoc network. Accordingly, the accounting can be performed by an external accounting authority, thus minimizing the risk of fraudulent manipulation of the determining and/or the accounting operations.

The control center may occasionally or periodically contact an accounting authority of the external network about its status and may exchange accounting information.

Still further, while the control center 100 may be a single computing device, it is also possible that the control center comprises a plurality of computing devices, e.g. distributed computing devices in communication with one another.

The relay nodes 130 - 134 may be constituted by any kind of terminal of the ad-hoc network, such as a wireless communication device of a user, suitable for performing relay operations in the ad-hoc network as well as e.g. suitable for personal communication applications of the user. For example, the relay nodes 130 - 134 may be constituted by mobile telephone terminals, fixed wireless communication devices and the like.

Similarly, the communication devices 120 and 121 can be constituted by any kind of terminal of the ad-hoc network and/or of an external network, such as a communication device for performing personal communications and may also have the capability of relaying communication data on the behalf of further communication devices, i.e. may itself function as a relay node. Thus, the ad-hoc network may be composed of a large number of similar communication devices, suitable for personal communications and/or relay operations.

Still further, while the communication devices 120 and 121, and the relay nodes 130 - 134, may be subscribers of the ad-hoc network, they may, at the same time, be subscribers of any other communication network, such as the external network, as noted above. Further, while both communication devices 120 and 121 may be located in the ad-hoc network, in alternate examples it is possible that one of the communication devices is located external to the ad-hoc network, for example in an external mobile of fixed wired communication network.

A communication of information such as data and/or voice via the communication path 152 may involve wireless transmissions, however, it is also possible that wire bound transmissions are involved, such as in portions of the communication path, e.g. between individual relay nodes. For example, the ad-hoc network may be composed of disjunct groups of relay nodes and communication devices, at locations remote from one another, interconnected via any kind of communication facility. Moreover, at least one of the communication devices 120 and 121 may be located in an external network, external to the ad-hoc network, and the communications path 152 may at least partially run through external communication networks.

It is noted that programs may be provided having software instructions adapted to cause the elements of the above embodiments and to realize the functionalities described above. Further, computer-readable media may be provided, in which these programs are embodied. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The data stream or the data structure may constitute the computer-readable medium. Still further, a computer program product may be provided comprising the computer-readable medium.

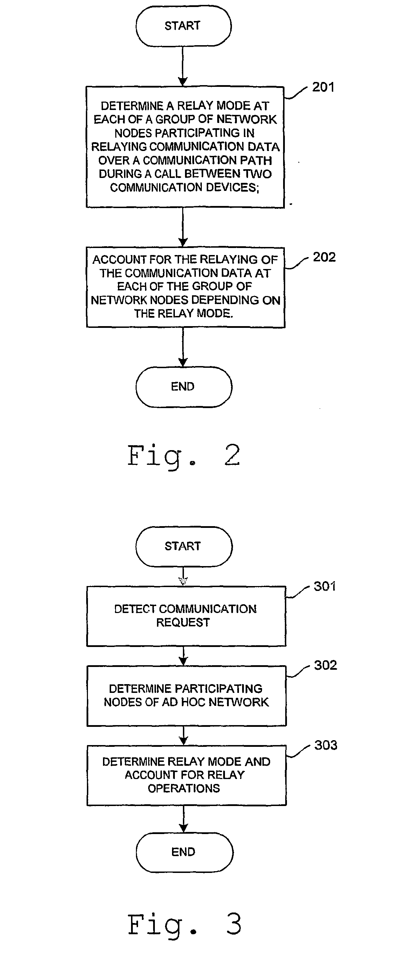

In the following a further embodiment of the invention will be described with regard to Fig. 2.

Fig. 2 shows an example of operations for controlling accounting operations in an ad-hoc network, particularly illustrating the basic determination and accounting operations for obtaining information on participating nodes in a communication and for accounting for relay services rendered. The operations shown in Fig. 2 may be carried out using the arrangement illustrated in Fig. 1, however, Fig. 2 is not limited thereto.

In a first operation 201 a relay mode at the relay nodes participating a relaying communication data over a communication path between two communication devices is determined.

As briefly noted above, the relay mode includes any characteristics of a transmission of a relay node on the behalf of the two communication devices, such as the communication devices 120 and 121. The relay mode may for example include transmission parameters such as a required data throughput, e.g. specifying a minimum transmission rate for the communication. Thus, while for voice communications a lower data rate may be specified, for data transmissions such as video transmissions, a higher data rate can be specified.

Further the relay mode may include a specification of a maximum transmission delay at the relay node or a maximum overall transmission time. For example, a voice transmission generally requires low delays, while data transmissions may not be time-critical.

Also, the relay mode may specify a allowed packet loss, e.g. a maximum packet loss allowed in a packet switched communications network to maintain a proper service.

Further, the relay mode may specify an allowed jitter such as a maximum allowed jitter for proper operations, the jitter being a measure in a packet switched communications network for differences in a packet transmission time of individual packets.

Similarly, the relay mode may specify any other parameters for the communication including any parameters specifying a quality of service.

According to one alternative, the control center 100 of Fig. 1 may determine the relay mode at each of the relay nodes 130, 131 and 132 in relaying communication data over the communication path 152 between the communication devices 120 and 121. While all nodes along the communication path may generally transmit using the same relay mode, they may also use different relay modes, e.g. depending on local characteristics of the communication path, etc..

The control center 100 may determine the relay mode on the basis of a communication request detected from a communication device wishing to establish a communication path to another communication devices, e.g. communication device 120 and/or 121. For example, the communication devices may request a certain relay mode required for the planned communication. Also, the control center 100 may assign a relay mode on the basis of a requested type of communication.

In an alternative example, the relay mode is determined beforehand by further elements of the ad-hoc network, e.g. upon initiating a communication based on a request. In this case the control center 100 determines the relay mode via interrogating relay nodes of the communication path established in the ad-hoc network. For example, the control center could determine participating nodes of the communication path and interrogate at least one of the participating nodes regarding an applicable relay mode for the communication. The relay mode may could thus be negotiated beforehand during establishing the communication path in the ad-hoc network, the control center only acquiring information on the established or to be established relay mode.

It may be sufficient to interrogate a single one of the participating relay nodes, if a relay mode for all participating relay nodes is identical. In the case, for example a relay node located closest to the control center could be interrogated to obtain information on the relay mode for the communication.

Alternatively, if relay modes at individual relay nodes are different, e.g. if transmission time delays at the respective relay nodes must be different, or if other transmission parameters differ, a relay mode could be determined at several or each of the participating nodes of the communication path in the ad-hoc network.

After the relay mode at each of the participating relay nodes is determined, in an operation 202 accounting operations are performed for accounting for the relaying of the communication data at each of the group of relay nodes, the accounting depending on the determined relay mode.

The accounting operations may include recording and/or storing information on the performed relay services for relaying the communication data via the communication path. In an example, the accounting includes storing, for each relay node, at least one of the relay mode, the duration of the communication, the amount of data transmitted, a time of provision of relay services, such as during day time, peak communication hours, or night time, and similar. Further, the accounting operations may include transmitting the recorded information on the relay services to a central accounting facility. Here, the term "relay services" is intended to cover all operations carried out or utilized in association with the communication of information between the communication devices. E.g., the information on relay services may pertain to the relay nodes providing the relay services and also to the communication devices utilizing the relay services. The central accounting facility may be a accounting and billing service facility of an external network or a separate central accounting and billing facility.

Moreover, the accounting may include at least one of allocating a compensation for the relay nodes and charging the communication devices.

Accordingly, the accounting operations, performed by e.g. the control center 100 of Fig. 1, may ranging from recording information on relay services to charging and allocating a compensation.

For example, in an ad-hoc network with dedicated communication links, a duration of the communication path between the communication devices may be stored while in an ad-hoc network with packet transmission the amount of data relayed by the relay node may be stored. Of course, any other kind of parameters could be maintained, allowing to determine the services rendered by the relay node, including information on a power consumption in association with the relay services, processing load or cycles, and similar.

Preferably, the control center 100 maintains, for each of the potential relay nodes of the ad-hoc network, accounting information identifying the extend of relay services rendered by each individual relay node over a certain period of time, i.e. including relay services in connection with a plurality of communications.

Further, while the control center may be arranged to maintain all information characterizing a certain communication between two communication devices, such as a communication via the communication path 152 between the communication devices 120 and 121 in Fig. 1, it may be sufficient, in order to reduce an amount of accounting information to be stored, to simply store a value identifying an accumulative amount of relaying services rendered by each of the relay nodes. This value may be computed based for example on the above outlined accounting information, as appropriate.

Based on the obtained accounting information the individual relay nodes could then be rewarded, for example periodically, for the rendered relay services. The reward for the relay services could include relay services, additional free airtime in the ad-hoc network, could include a monetary compensation or similar.

Particularly, if the control center forms a gateway from the ad-hoc network to an external communication network, and if the relay nodes are at the same time subscribers of the ad-hoc network and the external network, the reward could be indicated in a billing statement issued by the operator of the external network.

Further, based on the obtained accounting information the communication devices utilizing the services, such as the communication devices 120 and 121 in Fig. 1, could be appropriately charged for the rendered communication services.

In the following a further embodiment of the invention will be described with regard to Fig. 3.

Fig. 3 illustrates operations for supporting accounting in an ad-hoc network according to another embodiment of the invention, particularly illustrating operations to determine participating nodes of the ad-hoc network. The operations of Fig. 3 may be carried out by the arrangement of Fig. 1, however, Fig. 3 is not limited thereto.

In a first operation 301, a control center, such as the control center 100 of Fig. 1, detects a communication request regarding a desired communication between two communication devices in the ad-hoc network, such as the communication devices 120 and 121. The control center may be responsible for controlling establishing the communication in the ad-hoc network, in which case a communication device may issue a request for communication directly to the control center. However, the operations for establishing the communication path to accommodate the communication request may not necessarily be carried out by the control center, but by further elements of the ad-hoc network, including according to known techniques. In this latter case, the communication request or report may only have a declaratory nature, i.e., may inform the control center that the establishment of a communication path has been requested.

The communication request preferably includes identification information of the communication devices requesting the communication, e.g. device numbers, names, etc., of the communication device of the calling party and of the communication device of the called party. Further or alternatively, the communication request may include information on the communication path for serving the communication request and further information on the requested communication, such as a desired relay mode and similar.

If the communication request does not include information on any participating nodes along a communication path, in an operation 302 the control center determines the participating nodes of the ad-hoc network. Participating nodes of the ad-hoc network can be determined by the control center in various ways, including via interrogating each of the relay nodes of the ad-hoc network, requesting information whether the interrogated relay node participates in the communication, or may involve reviewing any other kind of information provided in the ad-hoc network in association with the communication call, such as information on the communication path, including identifiers of participating relay nodes.

After determining the participating nodes of the ad-hoc network, in an operation 303 the control center determines a relay mode of each of the participating nodes and accounts for the rendered relay operations. As noted before, the relay mode may be determined by interrogating at least one of the participating nodes of the ad-hoc network determined in operation 302, or may be obtained from the communication request or any other information on the established communication via the communication path, such as communication path 152 in Fig. 1.

Further, as also noted before, the relay operations may be accounted for by storing information specifying the rendered relay operations, such as a duration of the relay operations, data throughput, time of service and similar.

With the operations illustrated in Fig. 3, the control center is enabled to obtain information on communications within the ad-hoc network, to determine participating nodes in each communication and to account for rendered relay operations.

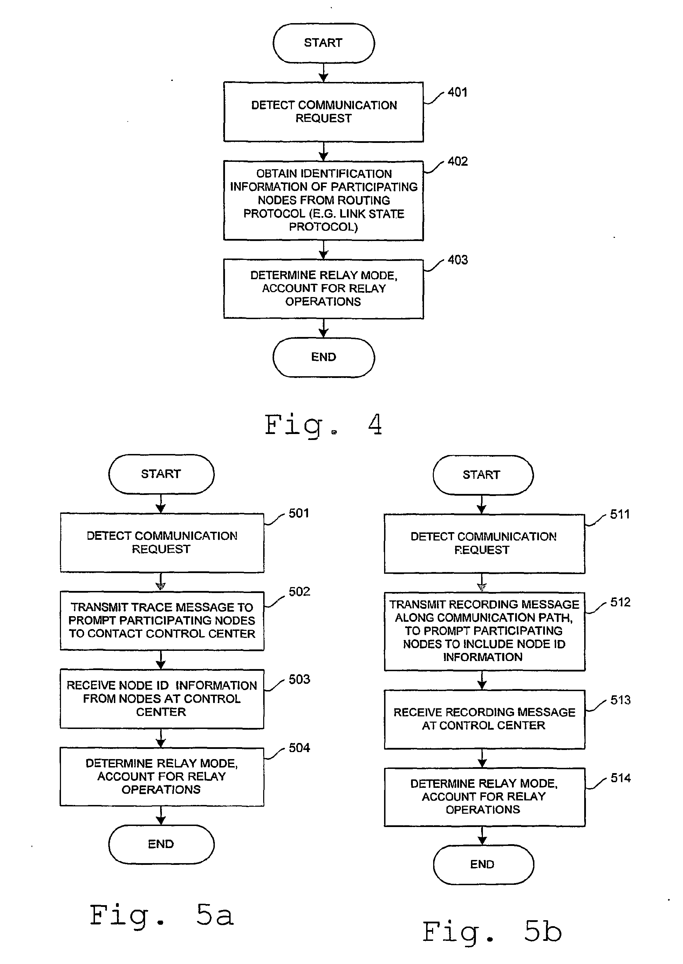

In the following a further embodiment of the invention will be described with regard to Fig. 4.

Fig. 4 particularly illustrates operations in association with identifying information on participating nodes. The operations of Fig. 4 may be carried out by the arrangement shown in Fig. 1, however, Fig. 4 is not limited thereto.

Similar to operation 301, in an operation 401 a communication request or report in the ad-hoc network is detected.

Thereafter, in an operation 402, identification information specifying the participating nodes along the communication path is obtained from a routing protocol. Generally, in an ad-hoc network a communication path between communication devices is established via a routing protocol of the ad-hoc network, containing rules to select and allocate relay services among a number of participating nodes of the ad-hoc network. Establishing a communication path between communication devices may involve obtaining positional information of the communication devices and/or of potentially eligible relay nodes for performing relay operations to establish the communication between the requested communication devices. Based on the positional information a communication path between the requesting communication devices may then be identified. If necessary, based on an availability of the identified relay nodes, alternate paths and nodes may be selected and finally the communication path between the requesting communication devices can be established via one or a plurality of relay nodes of the ad-hoc network, such as the relay nodes 130, 131 and 132 shown in Fig. 1. Ad-hoc networks operating according to such a protocol may store information identifying each of the participating nodes forming part of the communication path between the requesting communication devices. This information may be stored somewhere in the ad-hoc network and may be accessed by the control center, e.g. via a request issued from the control center towards a storage facility, storing information on the participating nodes.

In an example, in an ad-hoc network operating in accordance with the link state protocol such information on participating nodes is available and can be retrieved by the control center.

Thereafter, based on the obtained identification information, the relay mode at each of the participating relay nodes may be determined, as outlined before, and proper accounting operations for the rendered relay operations may be carried out, in an operation 403. Operation 403 may substantially correspond to operation 303 outlined before.

In accordance with the embodiment of Fig. 4 the control center can conveniently retrieve existing information from a routing protocol of the ad-hoc network, the identification information specifying the participating relay nodes. Accordingly, determination of participating nodes can be greatly simplified and communication and processing resources can be saved.

In the following further embodiments of the invention will be described with regard to Figs. 5a and 5b.

Figs. 5a and 5b illustrate alternatives for determining a group of relay nodes participating in a communication between two communication devices. The operations of Fig. 5a and 5b may be carried out by making use of the arrangement shown in Fig. 1, however, Figs. 5a and 5b are not limited thereto.

First, an embodiment for detecting information on participating nodes by making use of a trace message will be described with regard to Fig. 5a.

Similar to operation 301 and 401, in an operation 501 the control center detects a communication request.

The communication request notifies the control center regarding a communication established or to be established between communication devices, such as the communication via the communication path 152 between the communication devices 120 and 121 in Fig. 1.

Thereafter, in an operation 502 the control center transmits a trace message along the communication path, such as communication path 152 in Fig. 1, to prompt the participating nodes to contact the control center.

To transmit the trace message along' the communication path, the control device may transmit a corresponding request to at least one of the requesting communication devices or to any other element of the communication path, including a relay node, instructing the receiving element to pass the trace message along the communication path. If the receiving device is not located at one end of the communication path, a trace message may be transmitted into both directions along the path, towards the communication devices. Preferably, however, the trace message will be transmitted along the communication path via one of the communication devices, as the identity of the communication devices will be known from at the control center, e.g. from the communication request.

The trace message is a message which is passed along from node to node in the communication path within the ad-hoc network. For example, the trace message could be transmitted from the control center 100 to the communication device 120 with an instruction to transmit the trace message along the communication path 152. In response thereto the communication device 120 will forward the trace message to the relay node 130 shown in Fig. 1, prompting the relay node 130 to contact the control center. The message will then be forwarded by the relay node 130 to the relay node 131 and therefrom to the relay node 132, until it reaches the communication device 121.

Each relay node, prompted by the trace message to contact the control center, prepares a message at least including identification information of the corresponding relay node. The message may further include information on a relay mode for transmission at the corresponding relay node and further information specifying the communication, such as a transmission time, e.g. day time, night time, etc., and similar.

Each communication node transmits this response message to the control center, such as the control center 100 of Fig. 1, where the messages are received in an operation 503, the messages including the node identification information and potentially further information specifying the relay services rendered or to be rendered.

Thereafter, in an operation 504 the control center determines a relay mode and accounts for relay operations, as outlined before. The relay mode may be determined directly from the messages received at the control center in operation 503, if included, or may be determined via a further interrogation of the relay nodes, as detailed before.

In accordance with the above embodiment the control center may conveniently collect information on relay nodes participating in the relaying of communication data via a communication path between communication devices, by using a trace message forwarded along the communication path.

According to a further example, the trace message may be implemented using the IPv6 (Internet Protocol Version 6) hop-by-hop options header. The IPv6 hop-by-hop options header provides message space for including customized instructions for individual relay nodes of an ad-hoc communications network.

Still further, according to another example, the control center may perform an ICMP (Internet Control Message Protocol) trace route to obtain information on nodes along a communication path. In this case all participating nodes must support ICMP.

In the following a further embodiment of the invention will be described with regard to Fig. 5b, particularly showing an alternative to collect information on participating nodes by making use of a recording message. The operations of Fig. 5b may be carried out via the arrangement shown in Fig. 1, however, Fig. 5b is not limited thereto.

In a first operation 511 a communication request is detected at the control center, similar to operations 301, 401 and 501.

Thereafter, in an operation 512, similar to operation 502, a recording message is transmitted by the control center along the communication path, to prompt participating nodes to include node ID information into the recording message. The recording message may be transmitted along the communication path as it was outlined earlier with regard to the trace message of operation 502 in Fig. 5a. However, instead of prompting each relay node to contact the control center, in the operation 512 the participating node includes its node ID information into the recording message, before forwarding the recording message to a subsequent relay node.

After the recording message has reached the end or the ends of the communication path, i.e. one of the communication devices, the communication device returns the recording message to the control center, where it is received in an operation 513.

The recording message, in addition to the ID information of the relay node, may further include information on relay modes, relaying times and similar, as noted before with regard to the trace message.

In an operation 514, after receiving the recording message, the control center determines a relay mode, accounts for relay operations and similar, as noted before.

Thus, in an alternative to the embodiment of Fig. 5a, the control center may also use a recording message to obtain information on participating relay nodes.

Again, in another example, the IPv6 hop-by-hop options header may be used to implement the recording message and may be used to receive ID information and potentially further information provided by the individual relay nodes along the communication path.

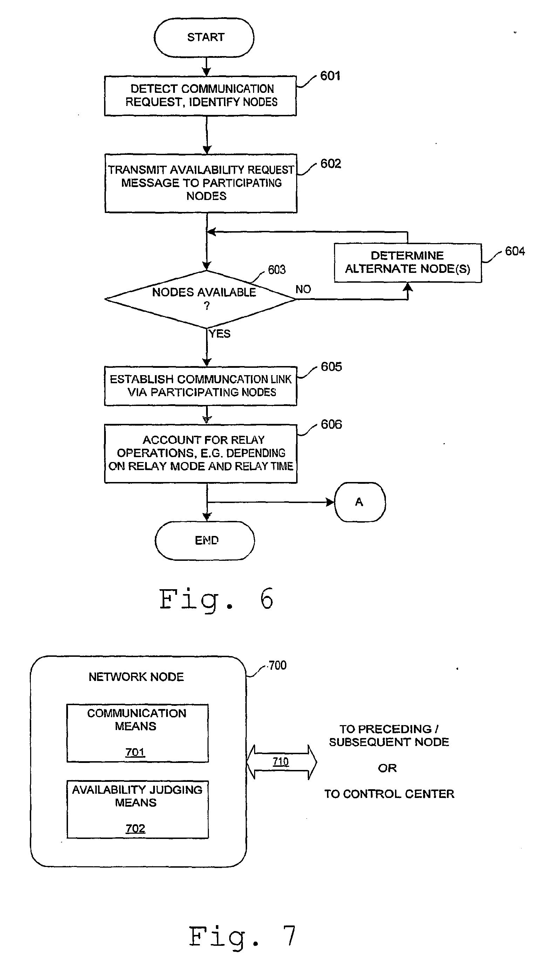

In the following a further embodiment of the invention will be described with regard to Fig. 6.

Fig. 6 shows operations of controlling accounting operations in an ad-hoc communication network, particularly illustrating steps to obtain information on the availability of relay nodes along the communication path to take over relay operations.

In a first operation 601 a communication request is detected, e.g. as outlined with regard to previous embodiments. Further, in operation 601 the nodes along the communication path for participation in the relaying of communication data between communication devices are identified, as outlined before with regard to the previous embodiments.

In an operation 602 an availability request message is transmitted to participating nodes of the ad hoc network, which are or scheduled to be participating in relaying communication data, to determine their availability. The availability request message is provided for prompting the participating nodes of the communication network to indicate whether they are actually available and/or willing to relay communication data. The availability request message may also include further information on the communication, such as a compensation amount to be awarded for participation as relay node, a time of the required relay operation and similar. If a relay mode at the relay nodes is not already determined, the availability request message may also include information on a required relay mode for the relaying of communication data.

As the availability request message can also include information on a compensation for participation as a relay node of the ad hoc network, an owner of the relay node may reach a decision whether the relay node is available for the requested relay operations.

For example, a user of the relay node may preset a number of conditions under which the relay node will carry out relay operations.

If the conditions preset by the user are met, determined based on information of the availability request message, the relay node will respond to the control center with a positive acknowledgement, i.e. will prepare itself for taking over relay operations.

In addition thereto, an authorization of at least one of the relay nodes to provide relay services in the ad-hoc network can be determined in operation 602. The authorization may be determined by requesting a previously assigned authorization code from the relay nodes or similar. Also, an authorization registry may be visited, e.g. centrally maintained, in order to determine the authorization of the respective relay nodes.

This allows to enhance a ad-hoc network security as only trusted nodes may provide relay services and thus get hold of information transmitted between the communication devices. Moreover, an authorization of at least one of the communication devices to obtain relay services of the ad-hoc network can be determined. Again, the authorization may be determined by requesting a previously assigned authorization code from the communication device or e.g. an authorization registry may be visited, as noted above. Accordingly, also an unauthorized utilization of relay services can be prevented.

In an operation 603 the control center then determines, based on the acknowledgement messages from the relay nodes, whether all nodes are available.

If in operation 603 the decision is "YES", i.e., if all nodes are available, the communication link is established via the participating nodes in an operation 605. Establishing the communication link through the ad-hoc network via the participating nodes may take place as known in the art.

Thereafter, in an operation 606 accounting operations for the relay operations carried out at the individual participating relay nodes is performed, e.g. depending on the relay mode and/or a relay time and similar, as noted before.

If in operation 603 the decision was "NO", indicating that at least one node returned a negative acknowledgement message, i.e. was unavailable, the control center determines an alternate node or alternate nodes for the communication in an operation 604. Alternate nodes may be determined using a recording message, a trace message, or may be obtained from a routing protocol, as detailed before.

Accordingly, the embodiment of Fig. 6 allows to increase the accuracy of an accounting for relay operations, as only participating nodes will be rewarded for the assumed relay operations.

In the following a further embodiment of the invention will be described with regard to Fig. 7.

Fig. 7 illustrates elements of a relay node of the ad-hoc network, generally denoted at 700. The relay node, as outlined before, may be constituted by for example a mobile communication device of the ad-hoc network, a fixed wireless communication device or any other kind of communication device. The relay node has the capability of relaying communication data on behalf of further communication devices of the ad-hoc network, i.e., to establish a communication path between two communication devices wishing to communicate with one another. As illustrated by the arrow 710, the relay nodes 700 communicate with preceding and/or subsequent nodes in a communication path in the ad-hoc network, and/or may communicate with the control center, such as the control center 100 shown in Fig. 1.

The relay node 700 includes communication means 701 to communicate with the preceding and subsequent nodes and the control center, and to receive an availability request message from the control center for determining an availability of the relay node to perform relay operations in a communication path for communicating data between two communication devices according to a relay mode. The availability request message may have the elements outlined with regard to the previous embodiments, particularly the embodiment of Fig. 6.

Further, the relay node includes availability judging means 702 for determining an availability of the relay node for actually performing the relay operations, based on a judgment at the relay node.

Upon determining the availability of the relay node for relay operations, an availability acknowledgement message is returned via the communication means to the control center, indicating whether the relay node is available or not.

The judgment whether the relay node is available for relay operations, as noted above, may be based on the required relay mode, such as data throughput, delay time, and similar, and may further be based on a performance characteristics of the relay node, such as processing capability, remaining available battery power, and/or compensation to be awarded for the relay operations.

The availability may be automatically judged at the relay node, e.g. based on information transmitted with the availability request message, and may be based on predetermined conditions under which the relay node shall be made available for relay operations, these conditions for example being preset by a user of the relay node.

The relay node, as noted above, may be constituted by any suitably adapted communication device, and preferably includes a processing unit and a memory for storing software instructions to realize the above outlined functionality.

Moreover, the relay node is preferably adapted to receive and suitably process a trace message, prompting the relay node to contact the control center, as outlined with regard to previous embodiments.

Further, the communication means is preferably arranged to receive, from a preceding relay node in the communication path, a recording message, the recording message being transmitted along the communication path, such as outlined with regard to previous embodiments.

Further, the relay node preferably is adapted to record an identifier of the relay node in the recording message, and possibly further information regarding the relaying of communication data, and to forward the recording message to a subsequent relay node in the communication path, in order to alternately provide the control center with an identifier of the relay node.

Still further, the relay node may be adapted to notify the control center regarding an actual relay time and/or other parameters of the relay services, as outlined before.

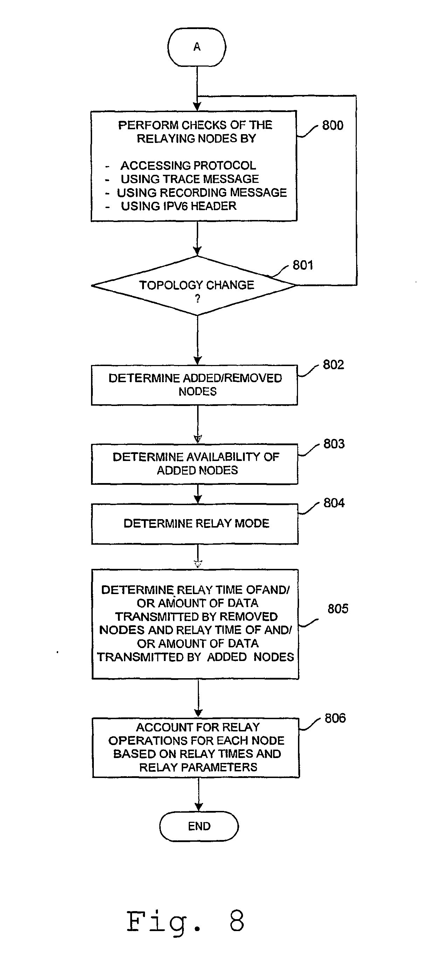

In the following a further embodiment of the invention will be described with regard to Fig. 8.

Fig. 8 illustrates operations for controlling accounting operations in an ad-hoc communications network, particularly outlining operations upon a topology change. Operations of Fig. 8 may be carried out using the arrangement shown in Fig. 1 and Fig. 7, however, Fig. 8 is not limited thereto.

Operations of Fig. 8 may start at an exit point A illustrated in Fig. 6, i.e., after operation 606.

In a first operation 800 starting from point A, the control center determines whether a topology change of the communication path occurred. A topology change covers any changes of the ad-hoc network which influence a communication via the communication path, such as the communication path 152 shown in Fig. 1. As the devices of the ad-hoc network may be mobile communication devices, e.g. handheld mobile telephones or telephones mounted in vehicles, topology changes of the ad-hoc network, which affect the communication path, may occur. For example, a mobile station such as the mobile station 131 shown in Fig. 1, may move out of an area where it can connect to the neighboring communication devices 130 and 132 of Fig. 1. In this case a topology change occurred.

In an example, the control center is informed, e.g. via a message received from the ad-hoc network, about a topology change, but not on the complete new communication path. In this case the control center has to actively obtain information on the removed and/or added relay nodes, such as it was described with regard to Fig. 4, and Figs. 5a and 5b.

Thus, the control center may obtain information on the topology change from a communication protocol, may use a trace message to obtain information on a topology change, or may use a recording message, as outlined with regard to previous embodiments.

In a specific implementation example, the control center may use the Ipv6 hop-by-hop options header or perform an ICMP traceroute, as outlined before.

Alternatively or in addition thereto, in order to obtain information on topology changes of the ad-hoc network, information on such changes in the participating nodes may be actively obtained from the group of relay nodes during the call. For example, the control center may perform periodic checks to determine topology changes, during an ongoing communication, or may be instructed by another entity of the ad-hoc network to perform such a check of the relaying nodes, as outlined above.

Then, if in operation 801 the decision "NO", indicating that no topology change took place, operations return to operation 800, i.e., the control center performs further checks of the relaying nodes.

If in operation 801 the decision is "YES", indicating that a topology change took place, in an operation 802 the presence of added nodes is determined and/or removed nodes are determined. Again, the control center may determine added nodes as outlined before, e.g. by accessing a communication protocol, using a trace message or recording message and similar, as outlined with regard to previous embodiments. Further, the control center may identify removed nodes by comparing the participating nodes of the communication path after a topology change with the participating nodes before a topology change.

Thereafter, in an operation 803 the availability of the added nodes is determined, such as outlined with regard to previous embodiments, and in an operation 804 a relay mode is determined. It is noted that operations 803 and 804 are optional, and may be omitted, if the availability of the added nodes is already known and/or if the relay mode is already known.

Thereafter, in an operation 805 a relay time of the removed nodes and/or an amount of data transmitted and a relay time of and/or an amount of data transmitted by added nodes is determined. The relay time corresponds to a time of participation of a relay node in relaying communication data via the communication path.

Then, in an operation 806 the control center accounts for the relay operations carried out at each node, i.e. before and after the topology change, based on the relay times and based on the relay mode and further parameters, such as overall amount of data transmitted by a node, etc..

Further, the control center may use an ICMP (Internet Control Message Protocol) destination unreachable message in order to determine a topology change in the ad-hoc network affecting the communication path.

Accordingly, with the embodiment of Fig. 8 the control center may carry out an accurate accounting even in the presence of topology changes within the ad-hoc network affecting the communication path.

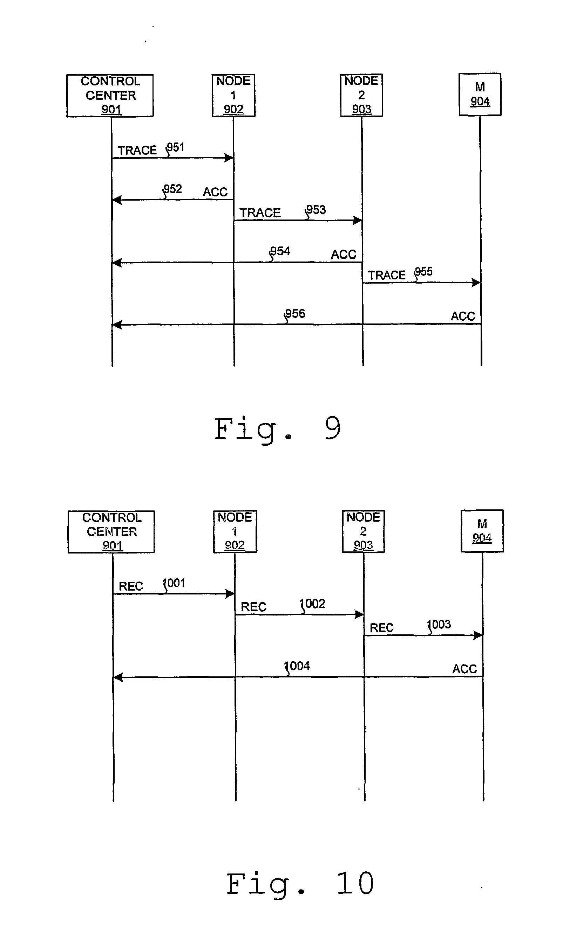

In the following a further embodiment of the invention will be described with regard to Fig. 9.

Further, Fig. 9 particularly illustrates a case where the control center obtains information on the availability of the relay nodes based on a trace message and shows elements of an ad-hoc network, including a control center 901, a first participating relay node 902, a second participating relay node 903 and a communication device 904.

The embodiment of Fig. 9 illustrates a time sequence of a flow of messages between the control center, relay nodes and communication devices for accounting purposes.

In the embodiment of Fig. 9 it is assumed that the control center forms part of the communication path, such as particularly in cases where the control center is constituted by a gateway to an external communication network and if a second communication device in communication with the device 904 is located in the external network, or any further communication network.

In a first step, after determining in the participating nodes of the ad-hoc network the control center 901 emits the trace message towards the first node 902, as indicated at reference numeral 951. Based on the trace message the first relay node 902 contacts the control center by making use of an acknowledgement or response message, as indicated at reference numeral 952, and further outlined with regard to previous embodiments. The acknowledgement or response message preferably includes an identifier of the first relay node 902 and optionally further information regarding the relay mode and similar.

As indicated at reference numeral 953, the first relay node 902 then forwards the trace message to the second relay node 903, prompting the relay node 903 to contact the control center 901 using an acknowledgement or response message 954, as outlined before.

Thereafter, the trace message is transmitted to the communication device 904, prompting the communication device 904 to respond to the control center 901 via a message 956, informing the control center that all relay nodes along the communication path have been contacted. 1

In the following a further embodiment of the invention will be described with regard to Fig. 10.

Fig. 10 pertains to a case of using a recording message in order to collect information on participating relay nodes and again illustrates the control center 901, the first relay node 902, the second relay node 903, and the communication device 904. In a first step the control center transmits the recording message to the first relay node 902, as indicated at reference numeral 1001. The relay node 902 includes identification information into the recording message, as noted before, and forwards the recording message towards the second relay node 903, as indicated as reference numeral 1002. Similarly, the second relay node 9003 includes identification information into the recording message, as outlined before, and forwards the recording message towards the communication device 904, as indicated at reference numeral 1003. The communication device 904 then returns an acknowledgement message towards the control center 901, as indicated at reference numeral 1004, disclosing the identity of all participating relay nodes in the communication path.

It is noted that, again, the IPv6 hop-by-hop options header may be used for implementing the trace and recording messages.

Moreover, it the control center is positioned in the midst of the communication path between two communication devices, the trace message and recording message may be transmitted in both directions, e.g. towards both communication devices, analogously to the embodiments described with regard to Fig. 9 and Fig. 10.

Further, it is noted that in an alternate scenario the control center does not form part of the communication path. In this case the trace message and the recording message may be transmitted initially to one of the participating communication devices, with an instruction to be forwarded along the communication path towards the second communication device. Reaching the second communication device, the trace or recording message will return an acknowledgement or report message towards the control center, as above.

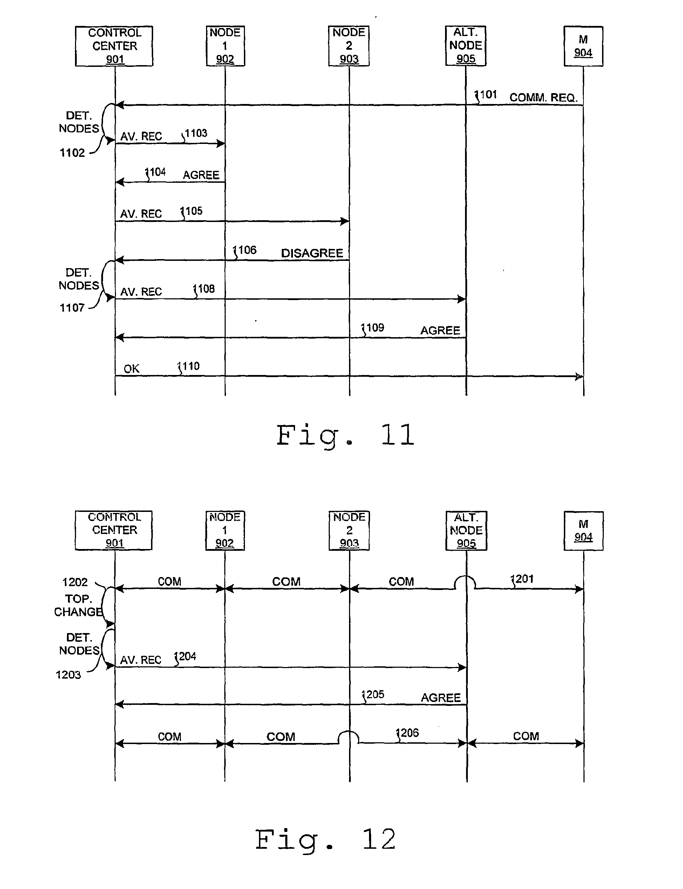

In the following a further embodiment of the invention will be described with regard to Fig. 11.

Fig. 11 illustrates an example of a flow of messages in a case where one of the relay nodes is not or not any longer available for relay operations. Fig. 11 and again illustrates the control center 901, the first relay node 902, the second relay node 903 and the communication device 904. Further, the embodiment of Fig. 11 illustrates an alternate node 905.

In a first operation 1101 a communication request is issued by the communication device 904 towards the control center 901.

Based on the communication request in an operation 1102 the control center 901 determines the nodes for participation in the communication path, as outlined with regard to previous embodiments.

Thereafter, in an operation 1103 an availability request message is transmitted to the first relay node 902, which is assumed to respond with a positive acknowledgement message 1104. Thereafter, the control center issues an availability request message 1105 towards the second relay node 903, which is assumed to respond with a negative acknowledgement message 1106, i.e. assumed to deny relay services.

As in this case the communication path towards the communication device 904 cannot be established, the control center 901 identifies an alternate node in an operation 1107, such as outlined with regard to previous embodiments, and transmits a further availability request message 1108 towards the determined alternate node 905. The alternate node 905 responds with a positive acknowledgement message 1109, i.e. agrees to rendering relay services, and in an operation 1110 the control center may transmit a positive acknowledgement towards the communication device 904. Further, the control center 901 may then perform any accounting operations to account for the relay operations, as outlined with regard to previous embodiments.

In the following a further embodiment of the invention will be outlined with regard to Fig. 12.

The embodiment of Fig. 12 illustrates a case of a topology change during a communication, as outlined before and again illustrates the control center 901, the first and second relay nodes 902 and 903, the communication device 904 and the alternate node 905.

At first, it is assumed that a communication path between the control center and the communication device, the communication path being denoted 1201, is established, involving the first relay node 902 and the second relay node 903 and bypassing the alternate node 905. Then, after a topology change took place, which is detected by the control center 901 indicated at reference numeral 1202, e.g. as outlined with regard to previous embodiments. Thereafter, in an operation 1203, the control center or any other entity of the ad-hoc network, determines an alternate node, in the present case the alternate node 905, also as outlined with regard to previous embodiments, In an operation 1204 the control center transmits an availability request message to the alternate node 905, which, in an operation 1205, in the present embodiment, is assumed to respond with a positive acknowledgement, indicating that the alternate node 905 is available for performing relay operations in exchange for the relay node 903.

Consequently, in an operation 1206 the alternate communication path is established between the control center 901 and the communication device 904 via the first relay node 902 and the alternate node 905.

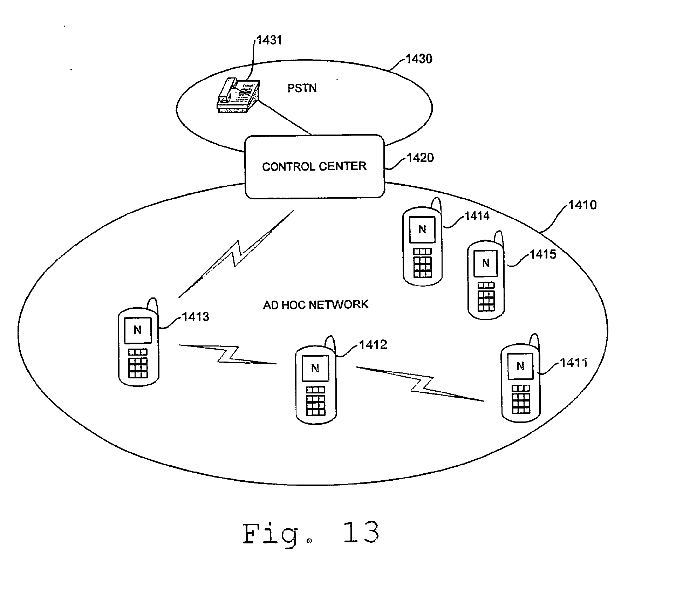

In the following further embodiment of the invention will be outlined with regard to Fig. 13.

Fig. 13 illustrates elements of an ad-hoc network 1410, a control center 1420 and an external network 1430.

The ad-hoc network may be any network where wireless devices are arranged to provide relay services on behalf of other wireless devices of the network, such as outlined with regard to previous embodiments. The ad-hoc network includes a plurality of wireless devices 1411, 1412, 1413, 1414 and 1415, e.g. mobile wireless and/or fixed wireless devices.

The external network 1430 may be any kind of communication network, such as a PSTN (Public Switched Telephone Network), a mobile communications network, the Internet or any other network. Preferably, however, the external network 1430 has a centralized operator and is a network in a trusted domain, i.e., a domain allowing secure operations control, including for accounting purposes. The external network 1430 includes a single exemplary communication device 1431, which may be a wireline or a wireless communication device.

Further, the control center 1420 is provided for controlling the accounting for relay services and/or communication services in the ad-hoc communications network 1410, and includes determining means to determine a relay mode at each of a group of relay nodes participating in relaying communication data over a communication path during a communication between two communication devices, and includes accounting means to account for the relaying of the communication data at each of the group of relay nodes depending on the relay mode, such as detailed in previous embodiments.

In the present embodiment, the control device forms part of a gateway from the ad-hoc network 1410 to the external network 1430, the gateway forming part of the communication paths between the communication devices of the ad-hoc network and the external network. As the control center forms part of the communication paths and thus relay operations to be accounted for, identification and communication with the individual nodes of the ad-hoc network is facilitated.

In an operations example shown in Fig. 13, the communication device 1411 of the ad-hoc is in or requests communication with the communication device 1431 of the external network 1430 via further communication devices 1412 and 1413 of the ad-hoc network, which serve as relay nodes as outlined with regard to previous embodiments.

The control center 1420 is arranged to first identify the participating relay nodes of the ad-hoc network, e.g. by obtaining identification information on the group of network notes either from a routing protocol, as outlined before, or by making use of a trace message or a recording message transmitted along the communication path towards the wireless device 1411, as also outlined with regard to previous embodiments.

Further, the control center transmits an availability request message to each of the thus identified participating relay nodes, i.e. relay nodes 1412 and 1413, in order to determine their availability, the relay nodes responding with an appropriate acknowledgement message, as detailed before.

Still further, the control center may receive a message from the ad-hoc network, including information on the occurrence of a topology change. Then, in order to obtain detailed information on topology changes of the ad-hoc network, information on such changes in the participating nodes may be actively obtained from the group of relay nodes during the call. For example, relay node changes due to a topology change may be determined using a routing protocol, a trace message, a recording message or an ICMP (Internet Control Message Protocol) destination unreachable message transmitted along the communication path towards the wireless device 1411, as detailed before.

In order to correctly account for relay services rendered by each of the relay nodes the control center may further determine a relay time and/or total amount of data transmitted, of each of the participating relay nodes and may then account for the relay operations based on the relay time and/or further relay parameters, including the relay mode.

The accounting operations performed by the control center advantageously include recording information on relay services rendered by the relay nodes and/or transmitting the recorded information on the relay services to a central accounting facility. Moreover, the accounting may include at least one of allocating a compensation for the relay nodes and charging the communication devices. Accordingly, operations ranging from recording information on relay services to charging and allocating a compensation can be integrated.

A compensation may then be rewarded on the basis of the accounted relay operations and the communication devices utilizing the service can be appropriately charged for the service, as it was detailed with regard to previous embodiments.

Still further, the control center may determine the authorization of at least one of the communication devices to obtain relay services of the ad-hoc network. Similarly. an authorization of at least one of the relay nodes to provide relay services in the ad-hoc network can be determined. Accordingly, unauthorized utilization and unauthorized provision of relay services can be prevented.

According to another embodiment, the control center for controlling accounting operations in an ad-hoc communications network includes determining means to determine a relay mode at each of a group of relay nodes participating in relaying communication data over a communication path during a communication between two communication devices; and accounting means to account for the relaying of the communication data at each of the group of relay nodes depending on the relay mode.

The accounting means may be arranged to record information on relay services rendered by relay nodes.

Further, the accounting means may be arranged to transmit the recorded information on the relay services to a central accounting facility.

And, the accounting means may be arranged to at least one of allocating a compensation and charging the communication devices.

According to another embodiment, the determining means is arranged to obtain information on the group of relay nodes from a routing protocol.

Fruther, the determining means may be arranged to obtain information on the group of relay nodes is obtained by transmitting a trace message along the communication path, prompting each relay node of the group of relay nodes to contact a control center.

Still further, the determining means may be arranged to obtain information on the group of relay nodes by transmitting a recording message to at least one of the communication devices along the communication path, and recording an identifier of each of the relay node of the group of relay nodes.

Still further, the determining means may be arranged to use the Ipv6 hop-by-hop options header to initialize a the trace message or recording message at each relay node.

Still further, the determining means may be arranged to determine an authorization of at least one of the communication devices to obtain relay services of the ad-hoc network.

Still further, the determining means may be arranged to determine an authorization of at least one of the relay nodes to provide relay services in the ad-hoc network.

Still further, the determining means may be arranged to transmit an availability request message to each of the participating relay nodes to determine the availability of each of the plurality of relay nodes in the communication path required for transmitting communication data between two communication device; and to receive an availability acknowledgement message from each of the participating relay nodes indicating whether the relay nodes are available or not.

Still further, the determining means may be arranged to obtain information on an alternative relay node and to interrogate the alternate relay node, if one of the relay nodes is not available.

The availability request message includes information on at least one of a required relay mode and a compensation offer.

Still further, the determining means may be arranged to receive a message from the ad-hoc network, the message including information on the occurrence of a topology change.

Still further, the determining means may be arranged to obtain information on dynamic changes in the participating relay nodes of the group of relay nodes during the call due to topology changes of the ad-hoc network.

Still further, the determining means may be arranged to check the relay nodes of the group of relay nodes to obtain information on dynamic changes in the participating relay nodes of the group of relay nodes during the call due to topology changes of the ad-hoc network.

Still further, the determining means may be arranged to check the relay nodes using one of
- a trace message;
- a recording message; and
- an ICMP (Internet Control Message Protocol) destination unreachable message.

The control center may constitute the external accounting authority.

Still further, the determining means may be arranged to determine at least one of a relay time and transmitted amount of data at each of the relay nodes of the group of relay nodes during the call between the two communication devices.

According to another embodiment, the control center constitutes part of a gateway from the ad-hoc network to an external network, the gateway forming part of the communication path between the two communication devices.

According to another embodiment, the relay node of the ad hoc network includes: communication means to receive an availability request message for determining an availability of the relay node to perform relay operations in a communication path for transmitting communication data between two communication device according to a relay mode; availability deciding means for determining an availability of the relay node for performing the relay operations; and the communication means is arranged to transmit an availability acknowledgement message indicating whether the relay node is available or not.

The communication means may be arranged to receive a trace message prompting the relay node to contact a control center.

Further, the communication means may be arranged to receive, from a preceding relay node in the communication path a recording message transmitted along the communication path, to record an identifier the relay node in the recording message and to forward the recording message to a subsequent relay node in the communication path.

While the invention was described by way of exemplary embodiments, these embodiments should not be construed as limiting the invention. The person skilled in the art rather is aware of many modifications of the above embodiments within the scope of the invention defined by the appended claims.

## Claims

1. Method for controlling accounting operations in an ad-hoc communications network, including:
detecting a communication established or to be established between two communication devices over a communication path;
transmitting a trace message along the communication path between the two communication devices, prompting each relay node of the group of relay nodes to contact a control center for obtaining information on the group of relay nodes participating in relaying communication data over the communication path during the communication between the two communication devices;
determining, after obtaining the information on the group of relay nodes, a relay mode at each of the group of relay nodes, the relay mode specifying a characteristic of the communication between the two communication devices; and
accounting for the relaying of the communication data at each relay node of the group of relay nodes depending on the relay mode.

2. Method of claim 1, wherein the accounting includes recording information on relay services rendered by the relay nodes.

3. Method of claim 1 or 2, wherein the accounting includes transmitting the recorded information on the relay services to a central accounting facility.

4. Method of at least one of the preceding claims, wherein the accounting includes at least one of allocating a compensation for the relay nodes and charging the communication devices.

5. Method of at least one of the preceding claims, wherein information on the group of relay nodes is obtained from a routing protocol.

6. Method of one of the preceding claims, wherein the Ipv6 hop-by-hop options header is used to initialize the trace message or recording message at each relay node.

7. Method of at least one of the preceding claims, including determining an authorization of at least one of the communication devices to obtain relay services of the ad-hoc network.

8. Method of at least one of the preceding claims, including determining an authorization of at least one of the relay nodes to provide relay services in the ad-hoc network.

9. Method of at least one of the preceding claims, including
transmitting an availability request message to each of the participating relay nodes to determine the availability of each of the plurality of relay nodes in the communication path required for transmitting communication data between two communication device; and
receiving an availability acknowledgement message from each of the participating relay nodes indicating whether the relay nodes are available or not.

10. Method of at least one of the preceding claims, including, if one of the relay nodes is not available, obtaining information on an alternative relay node and interrogating the alternate relay node.

11. Method of claim 10, wherein the availability request message includes information on at least one of
- a required relay mode.
- a compensation offer.

12. Method of at least one of the preceding claims, including receiving a message from the ad-hoc network, the message including information on the occurrence of a topology change.

13. Method of at least one of the preceding claims, including obtaining information on dynamic.changes in the participating relay nodes of the group of relay nodes during the call due to topology changes of the ad-hoc network.

14. Method of at least one of the preceding claims, including checking the relay nodes of the group of relay nodes to obtain information on dynamic changes in the participating relay nodes of the group of relay nodes during the call due to topology changes of the ad-hoc network.

15. Method of claim 14, including checking the relay nodes using one of
- a trace message;
- a recording message; and
- an ICMP (Internet Control Message Protocol) destination unreachable message.

16. Method of at least one of the preceding claims, wherein the accounting is performed by an external accounting authority.

17. Method of at least one of the preceding claims, wherein the relay mode specifies at least one of
- required data throughput;
- allowed transmission time delay;
- allowed packet loss; and
- allowed jitter.

18. Method of at least one of the preceding claims, including determining at least one of a relay time and transmitted amount of data at each of the relay nodes of the group of relay nodes during the call between the two communication devices.

19. Method of at least one of the preceding claims, wherein the compensation includes at least one of
- an ad-hoc network relay services; and
- a monetary compensation.

20. Method of at least one of the preceding claims, including increasing the compensation to increase the availability of nodes in the ad-hoc network.

21. Method of at least one of the preceding claims, wherein the control device forms part of a gateway from the ad hoc network to an external network, the gateway forming part of the communication path between the two communication devices.

22. A program having instructions adapted to carry out the method of any one of claims 1 to 21.

23. A computer readable medium, in which a program is embodied, wherein the program is to make a data processing device execute the method of any one of claims 1 to 21.

24. A computer program product comprising the computer readable medium of claim 23.

25. Control center for controlling accounting operations in an ad-hoc communications network, including
detecting means for detecting a communication established or to be established between two communication devices over a communication path;
communication means for transmitting a trace message along the communication path between the two communication devices, prompting each relay node of the group of relay nodes to contact a control center for obtaining information on the group of relay nodes participating in relaying communication data over the communication path during the communication between the two communication devices and to determine, after obtaining the information on the group of relay nodes, a relay mode at each of the group of relay nodes, the relay mode specifying a characteristic of the communication between the two communication devices; and
accounting means to account for the relaying of the communication data at each of the group of relay nodes depending on the relay mode.

26. Relay node of an ad hoc network for participating in relaying communication data over a communication path during a communication between the two communication devices, including
communication means to receive an availability request message for determining an availability of the relay node to perform relay operations in a communication path for transmitting communication data between two communication device according to a relay mode;
availability deciding means for determining an availability of the relay node for performing the relay operations;
wherein the communication means is arranged to transmit an availability acknowledgement message indicating whether the relay node is available or not; and
wherein the communication means is arranged to receive a trace message transmitted along the communication path between the two communication devices, prompting each relay node of the group of relay nodes to contact a control center for obtaining at a control center information on the group of relay nodes participating in relaying communication data over the communication path during the communication between the two communication devices and to forward the message to another relay node along the communication path.

## Patentansprüche

1. Verfahren zum Steuern von Abrechnungsoperationen in einem Ad-hoc-Kommunikationsnetz, beinhaltend:
Erfassen einer Kommunikation, die hergestellt ist oder hergestellt werden soll zwischen zwei Kommunikationsgeräten über einen Kommunikationspfad;
Übertragen einer Verfolgungsnachricht entlang des Kommunikationspfades zwischen den zwei Kommunikationsgeräten, die jeden Weiterleitungsknoten der Gruppe von Weiterleitungsknoten auffordert, ein Steuerzentrum zu kontaktieren zum Erhalten von Information über die Gruppe von Weiterleitungsknoten, die im Weiterleiten von Kommunikationsdaten über den Kommunikationspfad während der Kommunikation zwischen den zwei Kommunikationsgeräten teilnehmen;
Bestimmen, nach Erhalten der Information über die Gruppe von Weiterleitungsknoten, eines Weiterleitungsmodus an jedem der Gruppe von Weiterleitungsknoten, wobei der Weiterleitungsmodus eine Charakteristik der Kommunikation zwischen den zwei Kommunikationsgeräten spezifiziert; und
Abrechnen für die Weiterleitung der Kommunikationsdaten an jedem Weiterleitungsknoten der Gruppe von Weiterleitungsknoten abhängig von dem Weiterleitungsmodus.

2. Verfahren nach Anspruch 1, wobei die Abrechnung beinhaltet Aufzeichnen von Information über Weiterleitungs-Services, die von dem Weiterleitungsknoten geleistet werden.

3. Verfahren nach Anspruch 1 oder 2, wobei die Abrechnung beinhaltet Übertragen der aufgezeichneten Information über die Weiterleitungs-Services an eine Zentral-Abrechnungseinrichtung.

4. Verfahren nach einem der vorangegangenen Ansprüche, wobei die Abrechnung mindestens eines von Zuweisen einer Kompensation für die Weiterleitungsknoten und Belasten der Kommunikationsgeräte beinhaltet.

5. Verfahren nach mindestens einem der vorangegangenen Ansprüche, wobei Information über die Gruppe von Weiterleitungsknoten von einem Routing-Protokoll erhalten wird.

6. Verfahren nach einem der vorangegangenen Ansprüche, wobei der IPv6-Hop-by-Hop-Options-Header verwendet wird, um die Verfolgungsnachricht oder Aufzeichnungsnachricht an jedem Weiterleitungsknoten zu initiieren.

7. Verfahren nach mindestens einem der vorangegangenen Ansprüche, beinhaltend Bestimmen einer Autorisierung von mindestens einem der Kommunikationsgeräte, um Weiterleitungs-Services des Ad-hoc-Netzes zu erhalten.

8. Verfahren nach mindestens einem der vorangegangenen Ansprüche, beinhaltend Bestimmen einer Autorisierung von mindestens einem der Weiterleitungsknoten, um Weiterleitungs-Services in dem Ad-hoc-Netz bereitzustellen.

9. Verfahren nach mindestens einem der vorangegangenen Ansprüche, beinhaltend:
Übertragen einer Verfügbarkeitsanfragenachricht an jeden der teilnehmenden Weiterleitungsknoten, um die Verfügbarkeit von jedem der Vielzahl von Weiterleitungsknoten in dem Kommunikationspfad zu bestimmen, der zum Übertragen von Kommunikationsdaten zwischen den zwei Kommunikationsgeräten benötigt wird; und
Empfangen einer Verfügbarkeitsbestätigungsnachricht von jedem der teilnehmenden Weiterleitungsknoten, die anzeigt, ob die Weiterleitungsknoten verfügbar sind oder nicht.

10. Verfahren nach mindestens einem der vorangegangenen Ansprüche, beinhaltend, wenn einer der Weiterleitungsknoten nicht verfügbar ist, Erhalten von Information über einen alternativen Weiterleitungsknoten und Abfragen des alternativen Weiterleitungsknotens.

11. Verfahren nach Anspruch 10, wobei die Verfügbarkeitsanfragenachricht Information beinhaltet über mindestens einem von
- einem benötigten Weiterleitungsmodus;
- einem Kompensationsangebot.

12. Verfahren nach mindestens einem der vorangegangenen Ansprüche, beinhaltend Empfangen einer Nachricht von dem Ad-hoc-Netz, wobei die Nachricht Information über das Auftreten einer Topologie-Änderung beinhaltet.

13. Verfahren nach mindestens einem der vorangegangenen Ansprüche, beinhaltend Erhalten von Information über dynamische Änderungen in den teilnehmenden Weiterleitungsknoten der Gruppe von Weiterleitungsknoten während des Anrufs durch Topologie-Änderungen des Ad-hoc-Netzes.

14. Verfahren nach mindestens einem der vorangegangenen Ansprüche, beinhaltend Prüfen der Weiterleitungsknoten der Gruppe von Weiterleitungsknoten, um Information zu erhalten über dynamische Änderungen in den teilnehmenden Weiterleitungsknoten der Gruppe von Weiterleitungsknoten während des Anrufs durch Topologie-Änderungen des Ad-hoc-Netzes.

15. Verfahren nach Anspruch 14, beinhaltend Prüfen der Weiterleitungsknoten unter Verwendung von einem von
- einer Verfolgungsnachricht;
- einer Aufzeichnungsnachricht; und
- einer ICMP-(Internet Control Message Protocol)-Ziel-nicht-erreichbar-Nachricht.

16. Verfahren nach mindestens einem der vorangegangenen Ansprüche, wobei die Abrechnung durch eine externe Abrechnungsinstanz durchgeführt wird.

17. Verfahren nach mindestens einem der vorangegangenen Ansprüche, wobei der Weiterleitungsmodus mindestens eines spezifiziert von
- benötigtem Datendurchsatz;
- erlaubter Übertragungszeitverzögerung;
- erlaubtem Paketverlust; und
- erlaubtem Jitter.

18. Verfahren nach mindestens einem der vorangegangenen Ansprüche, beinhaltend Bestimmen mindestens einer von einer Weiterleitungszeit und übertragener Menge von Daten an jedem der Weiterleitungsknoten der Gruppe von Weiterleitungsknoten während des Anrufs zischen den zwei Kommunikationsgeräten.

19. Verfahren nach mindestens einem der vorangegangenen Ansprüche, wobei die Kompensation mindestens eines beinhaltet von
- einem Ad-hoc-Netz-Weiterleitungs-Services; und
- einer geldlichen Abfindung.

20. Verfahren nach mindestens einem der vorangegangenen Ansprüche, beinhaltend Erhöhen der Kompensation, um die Verfügbarkeit von Knoten in dem Ad-hoc-Netz zu erhöhen.

21. Verfahren nach mindestens einem der vorangegangenen Ansprüche, wobei das Steuergerät Teil eines Gateways von dem Ad-hoc-Netz zu einem externen Netz bildet, wobei das Gateway Teil des Kommunikationspfades zwischen den zwei Kommunikationsgeräten bildet.

22. Programm mit Instruktionen, die ausgebildet sind zum Ausführen des Verfahrens nach einem der Ansprüche 1 bis 21.

23. Computer-lesbares Medium, in welchem ein Programm eingebettet ist, wobei das Programm ausgebildet ist, ein Datenverarbeitungsgerät dazu zu bringen, das Verfahren nach einem der Ansprüche 1 bis 21 auszuführen.

24. Computerprogrammprodukt, das das Computer-lesbare Medium nach Anspruch 23 umfasst.

25. Steuerzentrum zum Steuern von Abrechnungsoperationen in einem Ad-hoc-Kommunikationsnetz, beinhaltend:
- Erfassungsmittel zum Erfassen einer Kommunikation, die hergestellt ist oder hergestellt werden soll zwischen zwei Kommunikationsgeräten über einen Kommunikationspfad;
- Kommunikationsmittel zum Übertragen einer Verfolgungsnachricht entlang des Kommunikationspfades zwischen den zwei Kommunikationsgeräten, die jeden Weiterleitungsknoten der Gruppe von Weiterleitungsknoten veranlasst, ein Steuerzentrum zu kontaktieren zum Erhalten von Information über die Gruppe von Weiterleitungsknoten, die im Weiterleiten von Kommunikationsdaten über den Kommunikationspfad während der Kommunikation zwischen den zwei Kommunikationsgeräten teilnehmen und zum Bestimmen, nach Erhalten der Information über die Gruppe von Weiterleitungsknoten, eines Weiterleitungsmodus an jedem der Gruppe von Weiterleitungsknoten, wobei der Weiterleitungsmodus eine Charakteristik der Kommunikation zwischen den zwei Kommunikationsgeräten spezifiziert; und
Abrechnungsmittel zum Abrechnen für die Weiterleitung der Kommunikationsdaten an jedem der Gruppe von Weiterleitungsknoten in Abhängigkeit von dem Weiterleitungsmodus.

26. Weiterleitungsknoten eines Ad-hoc-Netzes zum Teilnehmen im Weiterleiten von Kommunikationsdaten über einen Kommunikationspfad während einer Kommunikation zwischen den zwei Kommunikationsgeräten, beinhaltend
Kommunikationsmittel zum Empfangen einer Verfügbarkeitsanfragenachricht zum Bestimmen einer Verfügbarkeit des Weiterleitungsknotens, um Weiterleitungsoperationen in einem Kommunikationspfad durchzuführen zum Übertragen von Kommunikationsdaten zwischen zwei Kommunikationsgeräten entsprechend einem Weiterleitungsmodus;
Verfügbarkeitsentscheidungsmittel zum Bestimmen einer Verfügbarkeit des Weiterleitungsknotens zum Durchführen der Weiterleitungsoperationen;
wobei das Kommunikationsmittel ausgebildet ist, um eine Verfügbarkeitsbestätigungsnachricht zu übertragen, die anzeigt, ob der Weiterleitungsknoten verfügbar ist oder nicht; und
wobei das Kommunikationsmittel ausgebildet ist, um eine Verfolgungsnachricht, die entlang des Kommunikationspfades zwischen den zwei Kommunikationsgeräten übertragen wird, zu empfangen, die jeden Weiterleitungsknoten der Gruppe von Weiterleitungsknoten veranlasst, ein Steuerzentrum zu kontaktieren zum Erhalten an einem Steuerzentrum von Information über die Gruppe von Weiterleitungsknoten, die im Weiterleiten von Kommunikationsdaten über den Kommunikationspfad während der Kommunikation zwischen den zwei Kommunikationsgeräten teilnehmen und zum Weiterleiten der Nachricht zu einem anderen Weiterleitungsknoten entlang des Kommunikationspfades.

## Revendications

1. Procédé pour commander des opérations de comptabilisation dans un réseau de communication ad hoc, comprenant les étapes consistant à :
détecter une communication établie, ou à établir, entre deux dispositifs de communication, par un chemin de communication,
transmettre un message de trace le long du chemin de communication entre les deux dispositifs de communication, inviter chaque noeud relais du groupe de noeuds relais à entrer en contact avec un centre de commande pour obtenir une information sur le groupe de noeuds relais participant au relais des informations de communication dans le chemin de communication au cours de la communication entre les deux dispositifs de communication,
déterminer, après obtention de l'information sur le groupe de noeuds relais, un mode de relais en chacun des noeuds du groupe de noeuds relais, le mode de relais spécifiant une caractéristique de la communication entre les deux dispositifs de communication ; et
comptabiliser le relais des données de communication en chaque noeud relais du groupe de noeuds relais en fonction du mode de relais.

2. Procédé selon la revendication 1, dans lequel la comptabilisation inclut l'enregistrement d'informations sur les services de relais rendus par les noeuds relais.

3. Procédé selon la revendication 1 ou 2, dans lequel la comptabilisation inclut la transmission de l'information enregistrée sur les services de relais à une installation de comptabilisation centrale.

4. Procédé selon l'une au moins des revendications précédentes, dans lequel la comptabilisation inclut au moins l'une parmi une allocation d'une compensation pour les noeuds relais, et une charge pour les dispositifs de communication.

5. Procédé selon l'une au moins des revendications précédentes, dans lequel l'information sur le groupe de noeuds relais est obtenue par un protocole de routage.

6. Procédé selon l'une des revendications précédentes, dans lequel l'entête d'extensions saut par saut de Ipv6 est utilisé pour initialiser le message de trace ou le message d'enregistrement en chaque noeud relais.

7. Procédé selon l'une au moins des revendications précédentes, comprenant la détermination d'une autorisation, pour l'un au moins des dispositifs de communication, d'obtenir des services de relais du réseau ad hoc.

8. Procédé selon l'une au moins des revendications précédentes, comprenant la détermination d'une autorisation, pour l'un au moins des noeuds relais, de fournir des services de relais dans le réseau ad hoc.

9. Procédé selon l'une au moins des revendications précédentes, comprenant
la transmission d'un message d'interrogation de disponibilité à chacun des noeuds relais participants, pour déterminer la disponibilité de chacun des plusieurs noeuds relais dans le chemin de communication requis pour transmettre des données de communication entre deux dispositifs de communication, et
la réception d'un message d'accusé de réception de disponibilité de chacun des noeuds relais participants, indiquant si les noeuds relais sont disponibles ou non.

10. Procédé selon l'une au moins des revendications précédentes, comprenant, si l'un des noeuds relais n'est pas disponible, l'obtention d'une information concernant un noeud relais alternatif et l'interrogation du noeud relais alternatif.

11. Procédé selon la revendication 10, dans lequel le message d'interrogation de disponibilité comprend une information concernant l'un au moins parmi
- un mode de relais demandé
- une offre de compensation.

12. Procédé selon l'une au moins des revendications précédentes, comprenant la réception d'un message du réseau ad hoc, le message comprenant une information concernant la survenue d'un changement topologique.

13. Procédé selon l'une au moins des revendications précédentes, comprenant l'obtention d'une information concernant des changements dynamiques dans les noeuds relais participants du groupe de noeuds relais pendant l'appel, dus à des changements topologiques du réseau ad hoc.

14. Procédé selon l'une au moins des revendications précédentes, comprenant la vérification des noeuds relais du groupe de noeuds relais, pour obtenir une information concernant des changements dynamiques dans les noeuds relais participants du groupe de noeuds relais, pendant l'appel, dus à des changements topologiques du réseau ad hoc.

15. Procédé selon la revendication 14, comprenant la vérification des noeuds relais en utilisant l'un parmi
- un message de trace,
- un message d'enregistrement, et
- un message ICMP (Internet Control Message Protocol) de destination inaccessible.

16. Procédé selon l'une au moins des revendications précédentes, dans lequel la comptabilisation est effectuée par une autorité de comptabilisation externe.

17. Procédé selon l'une au moins des revendications précédentes, dans lequel le mode de relais spécifie au moins l'un parmi
- un débit de données demandé,
- une temporisation autorisée de transmission,
- une perte autorisée de paquets, et
- une instabilité autorisée.

18. Procédé selon l'une au moins des revendications précédentes, comprenant la détermination d'au moins l'un parmi une durée de relais et une quantité de données transmise en chacun des noeuds relais du groupe de noeuds relais pendant l'appel entre les deux dispositifs de communication.

19. Procédé selon l'une au moins des revendications précédentes, dans lequel la compensation comprend l'un au moins parmi
- des services de relais du réseau ad hoc, et
- une compensation monétaire.

20. Procédé selon l'une au moins des revendications précédentes, comprenant une augmentation de la compensation pour augmenter la disponibilité de noeuds dans le réseau ad hoc.

21. Procédé selon l'une au moins des revendications précédentes, dans lequel le dispositif de commande fait partie d'une passerelle entre le réseau ad hoc et un réseau externe, la passerelle faisant partie du chemin de communication entre les deux dispositifs de communication.

22. Programme comprenant des instructions adaptées pour mettre en oeuvre le procédé selon l'une quelconque des revendications 1 à 21.

23. Support lisible sur ordinateur, dans lequel est inscrit un programme, le programme étant destiné à faire exécuter par un dispositif de traitement de données, le procédé selon l'une quelconque des revendications 1 à 21.

24. Produit constitué par un programme d'ordinateur, comprenant le support lisible sur ordinateur de la revendication 23.

25. Centre de commande pour commander des opérations de comptabilisation dans un réseau de communication ad hoc, comprenant
des moyens de détection pour détecter une communication établie, ou à établir, entre deux dispositifs de communication, par un chemin de communication,
des moyens de communication pour transmettre un message de trace le long du chemin de communication entre les deux dispositifs de communication, invitant chaque noeud relais du groupe de noeuds relais à entrer en contact avec un centre de commande pour obtenir une information concernant le groupe de noeuds relais participant au relais des données de communication dans le chemin de communication au cours de la communication entre les deux dispositifs de communication, et à déterminer, après avoir obtenu l'information concernant le groupe de noeuds relais, un mode de relais en chaque noeud du groupe de noeuds relais, le mode de relais spécifiant une caractéristique de la communication entre les deux dispositifs de communication, et
des moyens de comptabilisation pour comptabiliser le relais des données de communication en chaque noeud du groupe de noeuds relais, en fonction du mode de relais.

26. Noeud relais d'un réseau ad hoc, destiné à participer à un relais de données de communication dans un chemin de communication au cours d'une communication entre les deux dispositifs de communication, comprenant des moyens de communication pour recevoir un message d'interrogation de disponibilité, pour déterminer une disponibilité du noeud relais pour effectuer des opérations de relais dans un chemin de communication, pour transmettre des données de communication entre deux dispositifs de communication en fonction d'un mode de relais,
des moyens de décision de disponibilité, pour déterminer une disponibilité du noeud relais pour effectuer les opérations de relais,
dans lequel les moyens de communication sont agencés pour transmettre un message d'accusé de réception de disponibilité indiquant si le noeud relais est disponible ou non, et
dans lequel les moyens de communication sont agencés pour recevoir un message de trace transmis le long du chemin de communication entre les deux dispositifs de communication, inviter chaque noeud relais du groupe de noeuds relais à entrer en contact avec un centre de commande pour obtenir au centre de commande une information sur le groupe de noeuds relais participant au relais de données de communication dans le chemin de communication au cours de la communication entre les deux dispositifs de communication, et faire suivre le message à un autre noeud relais le long du chemin de communication.
